# EUROPÄISCHE PATENTSCHRIFT

(11) **EP 3 014 152 B1**
(45) Veröffentlichungstag und Bekanntmachung des Hinweises auf die Patenterteilung: **03.05.2017**
(21) Anmeldenummer: 14738438.2
(22) Anmeldetag: 25.06.2014
(51) Int. Cl.: F16K 11/085, F16K 31/00

(54) **VENTIL MIT FAIL-SAFE-MECHANISMUS**
VALVE WITH FAIL-SAFE MECHANISM
SOUPAPE COMPORTANT UN MÉCANISME À SÛRETÉ INTÉGRÉE

(30) Priorität: 25.06.2013 DE 102013212044; 11.03.2014 DE 102014204485
(43) Veröffentlichungstag der Anmeldung: 04.05.2016
(73) Patentinhaber: MAGNA Powertrain GmbH & Co KG, 8502 Lannach (AT)
(72) Erfinder: ATSCHREITER, Friedrich, A-3365 Allhartsberg (AT); HOFSTETTER, Hannes, A-3830 Waidhofen a.d. Thaya (AT); OBERLADSTÄTTER, Markus, A-6020 Innsbruck (AT); AUINGER, Andreas, A-4632 Pichl bei Wels (AT); SCHLAGER, Gerd, A-4292 Kefermarkt (AT)
(74) Vertreter: Zangger, Bernd
(86) Internationale Anmeldenummer: PCT/EP2014/063427
(87) Internationale Veröffentlichungsnummer: WO 2014/207055

(56) Entgegenhaltungen:
- WO-A1-03/042517
- US-A- 5 979 373
- US-A1- 2003 098 077

## Beschreibung

Die vorliegende Erfindung betrifft ein Ventil zum Einsatz in einer Kühlmittelströmung gemäß dem Oberbegriff des Anspruchs 1, wie es beispielsweise aus der DE 10 2012 208 652 B3 bekannt geworden ist.

Derartige Ventile können zur Steuerung des Kühlmittelstroms einer Brennkraftmaschine zum Einsatz kommen, um im Fluidkreislauf je nach Lastfall eine optimale Kühlmitteltemperatur zu gewährleisten. Im Falle eines Fehlers wie beispielsweise einer fehlerhaften Ansteuerung des Ventils, dem Ausfall des Ventilaktuators oder dem Steckenbleiben des Ventils kann es jedoch zu einem unerwünschten Temperaturanstieg des Kühlmittels und damit zu kritischen Zuständen kommen, durch die die Brennkraftmaschine beschädigt werden kann. Um solch einem Fehlerfall vorzubeugen, bei dem die Kühlmitteltemperatur in unerwünschter Weise über eine vorbestimmte Temperatur ansteigt, weist das in der DE 10 2012 208 652 B3 beschriebene Ventil einen Fail-Safe-Mechanismus auf, der im Fehlerfall bewirkt, dass der Ventilkörper in eine vorbestimmte Position bewegt wird, in der der Kühlmittelstrom durch das Ventil maximal ist, um so Überhitzungszuständen im Kühlkreislauf entgegenzuwirken. Ein derartiger Fail-Safe-Mechanismus kann im vorliegenden Fall also auch als Rückstelleinrichtung bezeichnet werden.

Da bei dem in der DE 10 2012 208 652 B3 beschriebenen Ventil der Ventilkörper fest mit dem Stellaktuator verbunden ist, können jedoch nur solche Aktuatoren zum Einsatz kommen, die nicht selbsthemmend sind, da durch die Selbsthemmung die ordnungsgemäße Funktion des Fail-Safe-Mechanismus beeinträchtigt werden würde. Andernfalls müsste der Fail-Safe-Mechanismus in der Lage sein, Rückstellmomente aufzubringen, die ausreichend sind, um die Selbsthemmung des Aktuators zu überwinden, wozu die Torsionsfeder des Fail-Safe-Mechanismus entsprechend steif und damit verhältnismäßig groß ausgebildet werden müsste. Selbst im Falle nicht selbsthemmender Stellaktuatoren muss der Fail-Safe-Mechanismus der DE 10 2012 208 652 B3 bzw. dessen Torsionsfeder jedoch stets gegen den Widerstand bzw. das Trägheitsmoment des Aktuators arbeiten, wozu die Torsionsfeder entsprechend steif und damit verhältnismäßig groß ausgebildet werden muss.

Der vorliegenden Erfindung liegt daher unter anderem die Aufgabe zugrunde, das aus der DE 10 2012 208 652 B3 bekannt gewordene Ventil so weiterzuentwickeln, dass auch selbsthemmende Aktuatoren zum Einsatz kommen können, ohne dass dies zu Lasten der Baugröße des Ventils geht.
Aus der WO03/042517 A1 ist bekannt ein Ventil von seinem Antrieb über ein Verbindungselement zu entkoppeln, Dabei wird ein Thermo-Bimetall-Element eingesetzt, das eine axiale Entkopplung der Antriebswelle vom Ventilkörper ermöglicht. Dadurch kann eine Torsionsfeder das Ventil auf eine Position mit maximalen Durchfluss verdrehen.

Diese Aufgabe wird mit einem Ventil gelöst, das die Merkmale des Anspruchs 1 aufweist.

Insbesondere wird die Aufgabe dadurch gelöst, dass der Ventilkörper mit einem axial beweglichen Koppelelement in Eingriff steht, über das der Ventilkörper mittelbar mit der Aktuatorwelle lösbar verbunden ist, wobei im Fehlerfall, wenn also die Kühlmitteltemperatur aus welchen Gründen auch immer eine vorbestimmte Temperatur überschreitet, der Ventilkörper von der Aktuatorwelle infolge einer axialen Bewegung des Koppelelements entkoppelt wird, wohingegen der Fail-Safe-Mechanismus infolge der axialen Bewegung des Koppelelements mit dem Koppelelement in Dreheingriff gelangt, wodurch der Ventilkörper in eine vorbestimmte Fail-Safe-Position gedreht wird, in der die Kühlmittelströmung durch das Ventil vorzugsweise maximal ist.

Dadurch, dass der Ventilkörper von der Aktuatorwelle im Fehlerfall entkoppelt ist, muss der Fail-Safe-Mechanismus im Fehlerfall nicht gegen den Widerstand des Stellaktuators arbeiten; vielmehr muss der Fail-Safe-Mechanismus lediglich den Ventilkörper drehen können, wozu keine besonders steife Torsionsfeder benötigt wird. Hinzu kommt ferner, dass aufgrund der Entkopplung der Aktuatorwelle von dem Ventilkörper auch selbsthemmende Stellaktuatoren zum Einsatz kommen können, ohne dass eine besonders steife Torsionsfeder zur Überwindung der Selbsthemmung des Aktuators benötigt wird; vielmehr muss aufgrund der Entkopplung der Aktuatorwelle von dem Ventilkörper im Fehlerfalle die selbsthemmende Wirkung des Stellaktuators nicht überwunden werden, so dass auch in dieser Hinsicht keine besonders steifen und damit großbauenden Torsionsfedern für den Fail-Safe-Mechanismus benötigt werden.

Aufgrund der Tatsache, dass der Fail-Safe-Mechanismus nicht direkt auf den Ventilkörper sondern mittelbar auf diesen über das Koppelelement einwirkt, ist es ferner möglich, den Fail-Safe-Mechanismus als modular austauschbare Baueinheit auszugestalten, die nicht in den Ventilkörper integriert ist. Da sich die Feder somit nicht vollständig durch den Ventilkörper hindurch erstrecken muss, kann die Federlänge reduziert werden, was einer Erhöhung der Federkonstante gleichkommt, so dass zur Erzielung eines gewünschten Rückstellmoments schwächere Federn mit geringeren Radialabmessungen zum Einsatz kommen können.

Im Folgenden wird nun auf bevorzugte Ausführungsformen der Erfindung eingegangen. Weitere Ausführungsformen können sich aus den abhängigen Ansprüchen, der Figurenbeschreibung sowie den Zeichnungen ergeben.

So ist es vorgesehen, dass das Koppelelement einen Zylinderabschnitt aufweist, in dessen Außenumfang zumindest eine sich in Umfangsrichtung des Zylinderabschnitts erstreckende Nut ausgebildet ist, in die ein Mitnehmer des Fail-Safe-Mechanismus eingreift, über den einerseits der Fail-Safe-Mechanismus vorspannbar ist und andererseits der Ventilkörper im Fehlerfall in seine vorbestimmte Fail-Safe-Position gedreht werden kann, und die in Umfangsrichtung an einem ersten Ende durch einen Vorspannanschlag und an einem gegenüberliegenden zweiten Ende durch einen weiteren Anschlag begrenzt ist. Vorzugsweise sind dabei zwei sowohl in Axial- als auch in Umfangsrichtung zueinander versetzte Nuten in dem Zylinderabschnitt ausgebildet, wobei in jede dieser Nuten ein eigener Mitnehmer eingreift. Da der bzw. die Mitnehmer in die zumindest eine Umfangsnut des Koppelelements eingreifen, wird die Axialbewegung des Koppelelements in der gewünschten Weise auf den Fail-Safe-Mechanismus übertragen, wodurch dieser ausgelöst wird und mit dem Koppelelement in Dreheingriff gelangt.

Durch die durch die beiden Anschläge definierte Länge der zumindest einen Nut wird dabei der Arbeitsbereich des Ventils vorgegeben, welcher annähernd 360° betragen kann, wenn der Vorspannanschlag in unmittelbarer Nähe des weiteren Anschlags liegt. Konstruktionsbedingt sind jedoch der Vorspannanschlag und der weitere Anschlag in Umfangsrichtung um ein gewisses, konstruktionsbedingtes Maß zueinander versetzt, so dass sich mit dem erfindungsgemäßen Ventil Arbeitsbereiche von etwas weniger als 360° erzielen lassen. In einer bevorzugten praktischen Ausführungsform liegen die beiden in Rede stehenden Anschläge soweit auseinander, dass die zumindest eine Nut in Umfangsrichtung eine Bogenlänge besitzt, die einem Bogenwinkel von etwa 345° entspricht. Mit dem erfindungsgemäßen Ventil lassen sich somit Arbeitsbereiche von bis zu etwa 345° oder auch etwas mehr erzielen. Im Unterschied hierzu besitzt das in der DE 10 2012 208 652 B3 beschriebene Ventil lediglich einen Arbeitsbereich von 180° und ist damit hinsichtlich seines Einsatzzwecks auf Anwendungen begrenzt, bei denen solch ein Arbeitsbereich ausreichend ist.

Die Ausbildung mit zwei sowohl in axial als auch in Umfangsrichtung zueinander versetzten Nuten erweist sich demgegenüber dahingehend als vorteilhaft, dass dadurch gegenüber einer Ausführungsform mit nur einer einzigen Nut etwaigen unsymmetrischen Belastungszuständen, die unter Umständen zu einem Verkanten des Koppelelements führen können, entgegengewirkt wird. Darüber hinaus verteilt sich im Fehlerfall das Rückstellmoment im Falle von zwei Nuten, die vorzugweise in Umfangsrichtung um 180° zueinander versetzt sind, gleichmäßig auf die beiden Vorspannanschläge der beiden Nuten, an denen die zugehörigen Mitnehmer im Fehlerfall anschlagen, wodurch die Materialspannungen innerhalb des Koppelelements gering gehalten werden können.

Um den Fail-Safe-Mechanismus im Fehlerfall durch die Axialbewegung des Koppelelements auslösen zu können, ist gemäß einer weiteren Ausführungsform ein temperaturempfindliches Betätigungselement in Form beispielsweise eines Wachselements vorgesehen, das im Fehlerfall infolge einer axialen temperaturbedingten Verformung die axiale Bewegung des Koppelelements bewirkt, wozu es sich vorzugsweise einerseits an der Aktuatorwelle und andererseits an dem Koppelelement abstützt, das das Betätigungselement aufnimmt bzw. trägt. Um die Axialbewegung des Koppelelements herbeizuführen, ist somit kein separat anzusteuernder Aktivierungsmechanismus erforderlich, da das Betätigungselement selbst einen unerwünschten Temperaturanstieg erkennt und sich selbsttätig zur Erzielung der axialen Bewegung des Koppelelements entsprechend ausdehnt. Die auf diese Weise hervorgerufene Axialbewegung des Koppelelements wird dann über die in die zumindest eine Umfangsnut des Koppelelements eingreifenden Mitnehmer auf den Fail-Safe-Mechanismus übertragen, wodurch dieser ausgelöst wird und mit dem Koppelelement in Dreheingriff gelangt.

Um den Fail-Safe-Mechanismus durch Drehung der Aktuatorwelle über das mit der Aktuatorwelle lösbar verbundene Koppelelement in seinen vorgespannten Zustand überführen zu können, wird das Koppelelement durch Drehung der Aktuatorwelle in solch eine Richtung gedreht, die es ermöglicht, dass der jeweilige Vorspannanschlag am ersten Ende der jeweiligen Nut mit dem zugehörigen Mitnehmer des Fail-Safe-Mechanismus in Eingriff gelangt bzw. an diesen anstößt. Dies hat zur Folge, dass der Fail-Safe-Mechanismus bzw. dessen Torsionsfeder bei fortgesetzter Drehbewegung vorgespannt und somit gewissermaßen "aufgezogen" wird. Um den Fail-Safe-Mechanismus in diesem vorgespannten Zustand arretieren zu können, bis der Fehlerfall eintritt, weist der Fail-Safe-Mechanismus zumindest einen sich in axialer Richtung erstreckenden Rastnocken auf, der im vorgespannten Zustand den Fail-Safe-Mechanismus gegenüber einem sich in radialer Richtung erstreckenden Gehäusedeckel verriegelt. Vorzugsweise sind dabei jedoch zwei sowohl in Radial- als auch in Umfangsrichtung zueinander versetzte Rastnocken vorgesehen, wobei der Versatz im Umfangsrichtung vorzugsweise 180° beträgt, um unsymmetrische Belastungszustände zu verhindern.

Zwar kann gemäß einer einfachen Ausführungsform der zumindest eine Rastnocken ähnlich wie bei dem in der DE 10 2012 208 652 B3 beschriebenen Ventil in einer Aussparung im Gehäusedeckel eingreifen; gemäß einer bevorzugten Ausführungsform ist es jedoch vorgesehen, dass an der Innenseite des Gehäusedeckels zumindest ein sich in Umfangsrichtung erstreckender bogenförmiger Rampenabschnitt ausgebildet ist, der ein Widerlager ausbildet, gegen das der zumindest eine Rastnocken des Fail-Safe-Mechanismus im vorgespannten Zustand desselben vorgespannt und verriegelt ist. Aus Gründen der Belastungssymmetrie ist es auch hier wiederum gemäß einer bevorzugten Ausführungsform vorgesehen, dass zwei sowohl in Radial- als auch in Umfangsrichtung zueinander versetzte Rampenabschnitte vorgesehen sind, denen jeweils einer der vorzugsweise zwei Rastnocken zugeordnet ist. Auch beträgt hier der Versatz in Umfangsrichtung vorzugsweise 180°, um unsymmetrische Belastungszustände zu verhindern.

Die Widerlager anders als bei dem in der DE 10 2012 208 652 B3 beschriebenen Ventil nicht durch Ausnehmungen in einem Gehäusedeckel, sondern durch daran ausgebildete Rampenabschnitte zu bilden, erweist sich insbesondere dann als vorteilhaft, wenn entweder nur ein einziger Rampenabschnitt oder mehrere, vorzugsweise zwei in Radialrichtung zueinander versetzte Rampenabschnitte vorgesehen sind, da in diesem Falle durch den Fail-Safe-Mechanismus im Fehlerfall analog zum Arbeitsbereich des Ventils im Normalbetriebszustand ein Rückstellbereich mit einem Drehwinkel von annähernd 360° dargestellt werden kann. Wird nämlich der Fail-Safe-Mechanismus ausgelöst, so kann der jeweilige Rastnocken, nachdem er von dem Widerlager der jeweiligen Rampe entriegelt wurde, eine Bogenlänge zurücklegen, die einem Bogenwinkel von 360° entspricht, bis er erneut hinter der jeweiligen Rampe wieder zu liegen kommt. Dies gilt gleichermaßen im Falle von zwei radial versetzt zueinander angeordneten Rampen, da in diesem Falle aufgrund des radialen Versatzes der Rampenabschnitte das Widerlager der einen Rampe dem Rastnocken, der dem jeweils anderen Rampenabschnitt zugeordnet ist, nicht im Wege steht.

Gemäß einer weiteren Ausführungsform ist es vorgesehen, dass der zumindest eine Rastnocken an einer sich radial erstreckenden Scheibe des Fail-Safe-Mechanismus ausgebildet ist, die axial beweglich auf dem Koppelelement angeordnet ist. Aufgrund der axialen Beweglichkeit können die Rastnocken auf den Rampen aufreiten und an diesen entlang hochgleiten, wenn der Fail-Safe-Mechanismus durch Drehung der Aktuatorwelle vorgespannt wird. Die Scheibe kann dabei eine das Koppelelement umgebende Hülse an einem Ende kragenartig umgeben, wodurch eine Muffe gebildet wird, an deren Innenumfang die bereits zuvor erwähnten Mitnehmer ausgebildet sind. Somit sind die Mitnehmer und die Rastnocken direkt funktional miteinander gekoppelt, so dass die Axialbewegung des Koppelelements über die in die Nuten eingreifenden Mitnehmer zum Auslösen des Fail-Safe-Mechanismus auf die Rastnocken übertragen werden kann.

Gemäß noch einer weiteren Ausführungsform ist es vorgesehen, dass der Fail-Safe-Mechanismus (insbesondere die genannten Scheibe) durch eine Torsionsfeder rotatorisch vorgespannt ist, wobei diese Torsionsfeder gleichermaßen dazu dient, um die Scheibe in Axialrichtung gegen den Gehäusedeckel zu drücken bzw. gegen diesen vorzuspannen.

Da sich die Mitnehmer während des Aufziehens bzw. Vorspannens des Fail-Safe-Mechanismus mit dem Vorspannanschlag der jeweiligen Nut des Koppelelements in Anlage befinden und die die Rastnocken aufweisende Scheibe in einer ersten axialen Richtung ausweicht, wenn die Rastnocken beim Vorspannen des Fail-Safe-Mechanismus die gehörigen Rampen entlang hochgleiten, ist es gemäß einer weiteren Ausführungsform vorgesehen, dass die zumindest eine Nut des Koppelelements im Bereich ihres ersten Endes eine sich in dieser ersten axialen Richtung erweiternde Aufweitung aufweist. Hierdurch kann der jeweilige Mitnehmer innerhalb der jeweiligen Nut in axialer Richtung ausweichen, wenn die Scheibe während des Aufziehens des Fail-Safe-Mechanismus der Steigung der Rampen folgend in axialer Richtung ausgelenkt wird.

Die in Rede stehende Aufweitung am ersten Ende der jeweiligen Nut kann auch in der zu der ersten axialen Richtung entgegengesetzten zweiten axialen Richtung aufgeweitet sein. Die Aufweitung in der zweiten axialen Richtung dient dabei dazu, um ein Verklemmen des Fail-Safe-Mechanismus nach dessen Auslösung durch das temperaturempfindliche Betätigungselement zu verhindern, dessen axiale temperaturbedingte Verformung im Fehlerfalle die axiale Bewegung des Koppelelements bewirkt. Wenn nämlich der Fail-Safe-Mechanismus durch das temperaturempfindliche Betätigungselement ausgelöst wurde, kann sich dieses bei einem weiteren Temperaturanstieg in axialer Richtung weiter verformen, was nach dem Auslösen des Fail-Safe-Mechanismus dazu führen kann, dass das Koppelelement gegenüber dem Fail-Safe-Mechanismus über Reibung verspannt wird. Um diesen unerwünschten Überhub des temperaturempfindlichen Betätigungselements zu kompensieren, ist daher die in Rede stehende Aufweitung auch in der zweiten axialen Richtung aufgeweitet, sodass die Mitnehmer des Fail-Safe-Mechanismus in diesem Bereich beeinträchtigungsfrei zu liegen kommen können, wenn die Axialbewegung des Koppelelements nach dem Auslösen des Fail-Safe-Mechanismus weiter anhält.

Wie bereits zuvor erwähnt wurde, ist das Koppelelement axial beweglich und steht mit dem Ventilkörper in Dreheingriff. Gemäß einer weiteren Ausführungsform wird diese Koppelung dadurch erreicht, dass der Ventilkörper eine im Wesentlichen hohlzylindrische Gestalt aufweist, wobei mit dem Ventilkörper in seinem Innenraum ein Becherabschnitt drehstarr verbunden ist, der einen Kupplungsabschnitt des Koppelelements in axialer Richtung gleitend aufnimmt und mit diesem in Dreheingriff steht, was beispielsweise durch eine Kerbverzahnung oder jede andere nur in Umfangsrichtung wirksame formschlüssige Verbindung erreicht werden kann.

Vorzugsweise weist dabei der Becherabschnitt in seiner Umfangswandung zumindest eine Durchgangsöffnung auf, so dass durch diese das Kühlmittel in nächste Nähe zu dem temperaturempfindlichen Betätigungselement gelangen kann, welches von dem Koppelelement getragen wird. Auf diese Weise kann sichergestellt werden, dass das temperaturempfindliche Betätigungselement verzögerungsfrei auf unerwünschte Temperaturanstiege des Kühlmittels reagieren kann, um so möglichst zeitnah den Fail-Safe-Mechanismus auslösen zu können.

Was schließlich die Antriebsverbindung zwischen dem Koppelelement und der Aktuatorwelle betrifft, so ist es bevorzugt, wenn das Koppelelement durch einen formschlüssigen Eingriff eines unrunden Elements (z.B. eines Wellenflansches) einerseits in eine komplementär geformte Ausnehmung andererseits mit der Aktuatorwelle lösbar verbunden ist, wobei infolge der genannten axialen Bewegung des Koppelelements der formschlüssige Eingriff gelöst werden kann.

Im Folgenden wird die Erfindung nun rein exemplarisch unter Bezugnahme auf die Zeichnungen beschrieben, in denen:
- Fig. 1: ein Längsschnitt durch ein erfindungsgemäßes Ventil gemäß einer beispielhaften Ausführungsform ist;
- Fig. 2a , b: eine perspektivische Schnittdarstellung sowie ein Querschnitt des Ventilkörpers des Ventils der Fig. 1 ist;
- Fig. 3a - 3c: perspektivische Darstellungen des Koppelelements des Ventils der Fig. 1 sind;
- Fig. 4a - 4c: die Scheibe des Ventils der Fig. 1 in unterschiedlichen perspektivischen Darstellungen zeigen;
- Fig. 5: eine perspektivische Darstellung der Aktuatorwelle ist; und
- Fig. 6: eine perspektivische Innenansicht des Gehäusedeckels des Ventils der Fig. 1 ist.

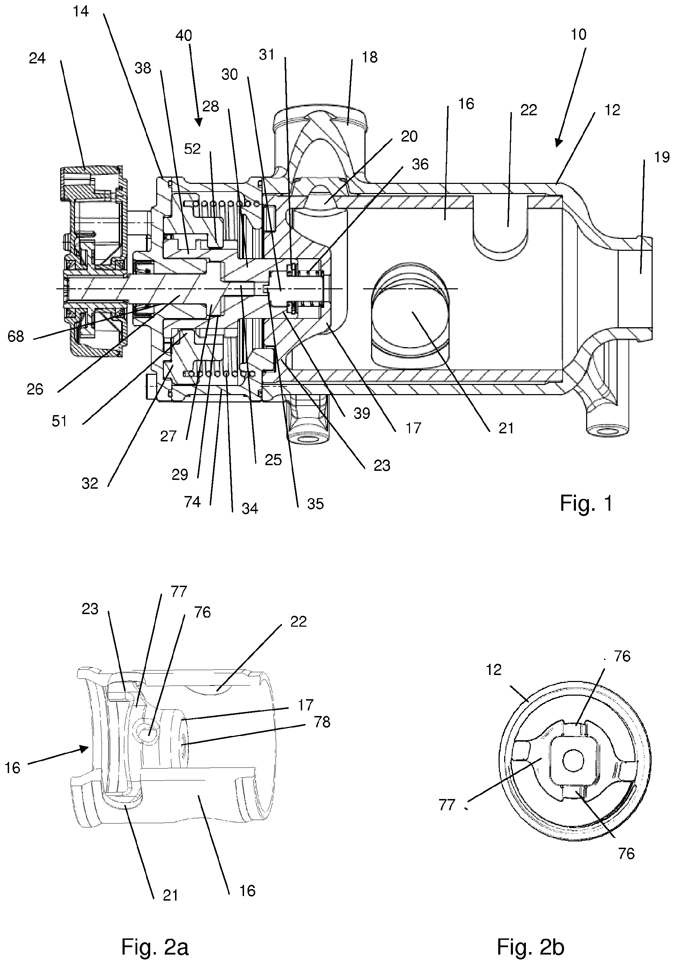

Gemäß Fig. 1 weist das Ventil 10 einen im Wesentlichen hohlzylindrischen Gehäuseabschnitt 12 mit einem Auslass 19 und mehreren Einlässen 18 auf, von denen jedoch nur einer erkennbar ist. Das Ventilgehäuse 12 nimmt in seinem Innenraum einen ebenfalls im Wesentlichen hohlzylindrischen Ventilkörper 16 drehbar auf, wobei dieser Ventilkörper 16 mehrere Einlassdurchgänge 20, 21, 22 aufweist, die je nach Drehstellung des Ventilkörpers 16 mit einem zugehörigen Einlass 18 ausgerichtet sind, wodurch ein Kühlmittelstrom zwischen dem jeweiligen Einlass 18 und dem Auslass 19 in Abhängigkeit der Drehstellung des Ventilkörpers 16 variiert werden kann.

Des Weiteren weist das Ventil 10 einen Stellaktuator 24 auf, dessen Welle 26 mittelbar und lösbar mit dem Ventilkörper 16 zur Drehung desselben verbunden ist. Die Aktuatorwelle 26 erstreckt sich dabei durch eine Öffnung 68 eines Gehäusedeckels 14 hindurch, welcher an einem im Wesentlichen hohlzylindrischen Gehäusekörper 74 angebracht ist, der den Fail-Safe-Mechanismus 40 des Ventils 10 aufnimmt und der seinerseits an dem Ventilgehäuse 12 lösbar angebracht ist. Anstelle den Fail-Safe-Mechanismus 40 in einem separaten Gehäusekörper 74 unterzubringen, kann jedoch das Ventilgehäuse 12 auch entsprechend länger ausgebildet werden, um den Fail-Safe-Mechanismus 40 aufnehmen zu können, ohne dass ein zusätzlicher Gehäusekörper benötigt wird. Die Unterbringung des Fail-Safe-Mechanismus 40 in einem an dem Ventilgehäuse 12 lösbar anbringbaren Gehäusekörper 74 erweist sich jedoch dahingehend als vorteilhaft, dass dadurch das Ventil 10 auch ohne Fail-Safe-Mechanismus betrieben werden kann, wozu ein entsprechender Gehäusedeckel direkt an dem Ventilgehäuse 12 anzubringen wäre (modularer Aufbau).

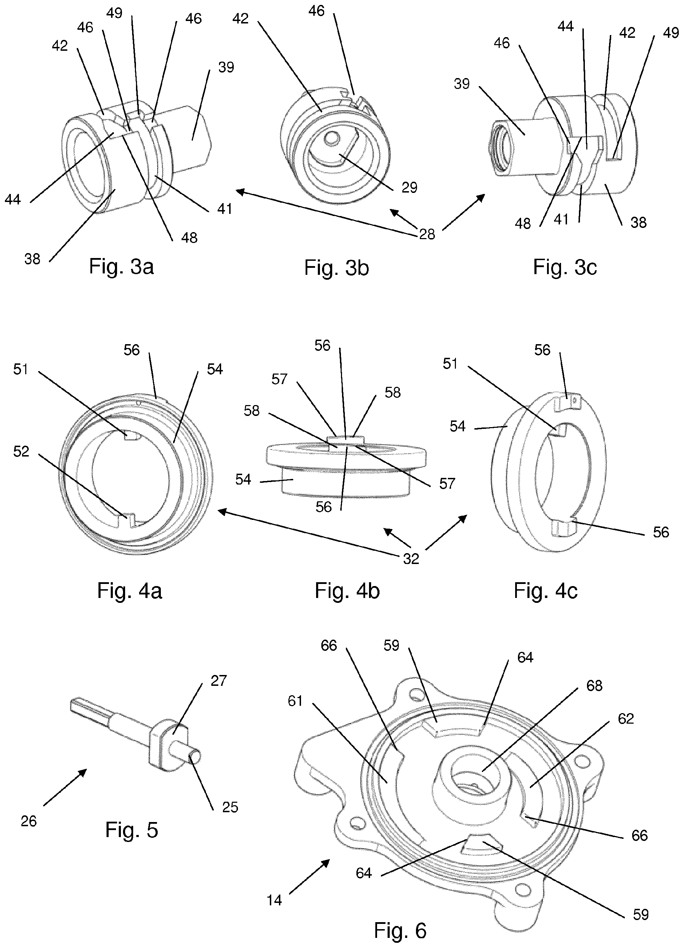

Wie der Fig. 1 desweiteren entnommen werden kann, weist das Ventil 10 ferner ein hülsenförmiges Koppelelement 28 auf, das in den Fig. 3a - 3c im Detail in unterschiedlichen Perspektiven dargestellt ist. Das hülsenförmige Koppelelement 28 weist einen Zylinderabschnitt 38 und einen Kupplungsabschnitt 39 auf, welcher hier als Sechskant ausgebildet ist und gleitend in einen Becherabschnitt 17 eingreift, der im Innenraum des Ventilkörpers 16 drehstarr mit dem Ventilkörper 16 über mehrere Speichenabschnitte 23 verbunden ist. Der Becherabschnitt 17 weist dabei eine zu der Gestalt des Außensechskants 39 des Koppelelements 28 korrespondierende bzw. komplementäre Gestalt in Form eines Innensechskants auf, so dass das Koppelelement 28 von dem Becherabschnitt 17 in Axialrichtung gleitend aufgenommen werden kann und mit diesem dauerhaft in Dreheingriff steht. Somit kann der Ventilkörper 16 durch das Koppelelement 28 gedreht werden.

Die Drehung des Koppelelements 28 wird dabei durch den Stellaktuator 24 hervorgerufen und über dessen Welle 26 auf das Koppelelement 28 übertragen, wozu die Aktuatorwelle 26 kragenartig von einem zweiseitig abgeflachten Wellenflansch 27 umgeben wird, welcher in eine dazu komplementär ausgebildete Ausnehmung 29 innerhalb des Koppelelements 28 passt, siehe Fig. 3b. Die Aktuatorwelle 26 ist somit über einen Zweiflach in Form des zweiseitig abgeflachten Wellenflansches 27 formschlüssig, jedoch lösbar mit dem Koppelelement 28 verbunden. Während des fehlerfreien Normalbetriebszustands des Ventils 10 ist somit der Ventilkörper 16 über das Koppelelement 28 mit der Aktuatorwelle 26 gekoppelt, so dass der Kühlmittelstrom zwischen Ein- und Auslass 18, 19 in der gewünschten Weise mit Hilfe des Stellaktuators 24 variiert werden kann.

Im Folgenden wird nun auf die Ausgestaltung des Fail-Safe-Mechanismus 40 eingegangen, welcher in dem Gehäusekörper 74 untergebracht ist. Der Fail-Safe-Mechanismus 40 umfasst unter anderem eine hier als Scheibe 32 bezeichnete Muffe, die in den Fig. 4a - 4c im Detail in unterschiedlichen Perspektiven dargestellt ist. Die Scheibe 32 weist einen sich axial erstreckenden Hülsenabschnitt 54 auf, siehe insbesondere Fig. 4b. Die Scheibe 32 umgibt dabei das Koppelelement 28, wobei sie mit Mitnehmern 51, 52, die am Innenumfang des Hülsenabschnitts 54 ausgebildet sind und nach radial innen ragen, in jeweilige Nuten 41, 42 eingreift, die im Außenumfang des Zylinderabschnitts 38 des Koppelelements 28 ausgebildet sind und sich in Umfangsrichtung des Zylinderabschnitts 38 erstrecken, siehe Fig. 3a - 3c. Sowohl die beiden Mitnehmer 51, 52 als auch die beiden Nuten 41, 42 sind dabei sowohl in Axial- als auch in Umfangsrichtung zueinander versetzt, wobei der Versatz in Umfangsrichtung vorzugsweise 180° beträgt, um unsymmetrische Belastungszustände zu verhindern.

Somit kann bei fest stehender Scheibe 32 das Koppelelement 28 während des Normalbetriebszustands zwischen einer ersten Stellung, in der die beiden Mitnehmer 51, 52 an einem ersten, als Vorspannanschlag ausgebildeten Ende 48 der beiden Nuten 41, 42 anschlagen, und einer zweiten Stellung frei verdreht werden, in der die beiden Mitnehmer 51, 52 an einem dem ersten Ende 48 gegenüberliegenden zweiten, als weiterer Anschlag 49 ausgebildeten Ende 49 der beiden Nuten 41, 42 anschlagen. Dies bedeutet, dass der Arbeitsbereich des Ventils 10 im Normalbetriebszustand durch die Länge der beiden Nuten 41, 42 in Umfangsrichtung vorgegeben ist.

Obwohl sich die Nuten 41, 42 in der dargestellten Ausführungsform nur über eine Bogenlänge erstrecken, die einem Winkel von etwa 200° entspricht, können sich die Nuten 41, 42 jedoch auch über eine Bogenlänge erstrecken, die einem Bogenwinkel von annähernd 360°, beispielsweise ca. 345°, entspricht, so dass der Ventilkörper 16 im Normalbetriebszustand einen Arbeitsbereich von annähernd 360° aufweist.

Während des Normalbetriebszustands des Ventils 10 ist dabei die Scheibe 32 des Fail-Safe-Mechanismus 40 an dem Gehäusedeckel 14 arretiert. Hierzu weist die Scheibe 32 zwei in Umfangsrichtung vorzugsweise um 180° zueinander versetzte Rastnocken 56 auf, die in axialer Richtung von der Unterseite der Scheibe 32 abstehen (siehe Fig. 4c). Im Normalbetriebszustand des Ventils 10 sind die Rastnocken 56 mit Hilfe einer Torsionsfeder 34 des Fail-Safe-Mechanismus 40 gegen die achsparallelen Flanken zweier Widerlager 66 vorgespannt. Die Widerlager 66 gehen entlang der Vorspannrichtung der Torsionsfeder 34 in zwei bogenförmige Rampenabschnitte 61, 62 über, die an der Innenseite des Gehäusedeckels 14 sowohl in Umfangsrichtung als auch in Radialrichtung versetzt zueinander ausgebildet sind, wobei auch hier der Versatz im Umfangsrichtung vorzugsweise 180° beträgt (siehe Fig. 6).

Auf diese Weise ist die Scheibe 32 des Fail-Safe-Mechanismus 40 während des Normalbetriebszustands des Ventils 10 in einer Ausgangsstellung an dem Gehäusedeckel 14 gesichert und beeinflusst daher nicht die Arbeitsweise des Ventils 10. Mit anderen Worten kann das Koppelelement 28 relativ zu der fest stehenden Scheibe 32 frei rotieren, wobei die Mitnehmer 51, 52 der Scheibe 32 entlang der Nuten 41, 42 des Koppelelements 28 gleiten. Der Stellaktuator 24 muss hierbei nicht gegen die Torsionsfeder 34 arbeiten.

Wenn jedoch beispielsweise die Ansteuerung des Ventils 10 fehlerhaft ist, der Stellaktuator 14 defekt ist oder das Ventil 10 steckenbleibt, kann es zu einer Fehlstellung des Ventils 10 und somit zu einem unerwünschten Temperaturanstieg des Kühlmittels kommen, das durch den zumindest einen Einlass 18 in das Ventil 10 strömt. In diesem Falle dient der Fail-Safe-Mechanismus 40 und insbesondere die rotatorisch vorgespannte Scheibe 32 dazu, um den Ventilkörper 16 in eine vorbestimmte Fail-Safe-Position zu drehen, in der der Kühlmittelstrom durch das Ventil 10 vorzugsweise maximal ist, um so unerwünschten Überhitzungszuständen im Kühlmittelkreislauf entgegenzuwirken.

Um den Fail-Safe-Mechanismus 40 auslösen zu können, ist im Innenraum des Ventilkörpers 16F ein temperaturempfindliches Betätigungselement 30 in Form beispielsweise eines Wachselements vorgesehen, welches von dem als Sechskant ausgebildeten Kupplungsabschnitt 39 des Koppelelements 28 aufgenommen wird, in dem es mittels eines Sprengrings 31 gesichert ist. Das temperaturempfindliche Betätigungselement 30 erstreckt sich dabei bis in den Becherabschnitt 17 des Ventilkörpers 16 hinein, welcher in seiner Seitenwandung zumindest eine Durchgangsöffnung 76 aufweist (siehe Fig. 2). Durch diese Durchgangsöffnung 76 kann das Kühlmittel unmittelbar zu dem temperaturempfindlichen Betätigungselement 30 vordringen, sodass dieses möglichst verzögerungsfrei den Fail-Safe-Mechanismus 40 auslösen kann.

Im Durchlass des Ventilkörpers 16 ist ein Träger 77 für ein alternativ einsetzbares, nicht dargestelltes Dehnelement angeordnet. Der Träger 77 ist über zwei Stege mittig gehalten und weist zwei sich gegenüberliegende und der Durchgangsöffnung 76 zugeordnete Umströmelemente auf, welche als Ausnehmungen die durch die Bypassöffnung BPÖ strömende Kühlflüssigkeit direkt auf das Dehnelement leiten. Durch diese direkte Anströmung kann das Dehnelement mit geringer Verzögerung reagieren (Figur 2b).

Figur 2a zeigt im Durchlass des zylindrischen Ventilkörpers 16 einen Träger 77, der für ein nicht dargestelltes Dehnelement angeordnet ist. Der Träger ist in seinem das Dehnelement tragenden Bereich topfförmig ausgebildet, wobei dieser Bereich ein Durchgangsöffnung 76 in Form einer Ausnehmung, einer Öffnung gestaltet, durch welche die durch die Einlassöffnung 21 strömende Kühlflüssigkeit direkt auf das Dehnelement geleitet wird. Durch diese direkte Anströmung kann das Dehnelement mit geringer Verzögerung reagieren. Am Boden des topfförmigen Bereiches des Trägerelements 77 ist eine weitere Öffnung 78 zum Ausströmen angeordnet.

Registriert nämlich das temperaturempfindliche Betätigungselement 30 einen unerwartet hohen Temperaturanstieg des Kühlmittels, so führt dies dazu, dass sich das Betätigungselement 30 in axialer Richtung ausdehnt und mittels eines Betätigungsstifts 35 eine Druckkraft auf einen Wellenfortsatz 25 am freien Ende der Aktuatorwelle 26 ausübt. Da das Koppelelement 28 in der zuvor erläuterten Art und Weise zwar drehstarr, jedoch axial beweglich von dem Becherabschnitt 17 aufgenommen wird, führt dies dazu, dass das Koppelelement 28 eine axiale Bewegung in Richtung des Becherabschnitts 17 erfährt bzw. in Richtung des Becherabschnitts 17 in axialer Richtung ausgelenkt wird. Dies wiederum hat zur Folge, dass der Ventilkörper 16 bzw. das Koppelelement 28 aufgrund der axialen Bewegung desselben von der Aktuatorwelle 26 entkoppelt wird. Insbesondere wird hierbei der Zweiflach in Form des zweiseitig abgeflachten Wellenflansches 27 aus der komplementär dazu ausgebildeten Ausnehmung 29 in Innern des Koppelelements 28 ausgerückt, so dass sich die Welle 26 und das Koppelelement 28 unabhängig voneinander drehen können.

Aufgrund der Tatsache, dass die beiden Mitnehmer 51, 52 der Scheibe 32 in die beiden Nuten 41, 42 des Koppelelements 28 eingreifen, führt die axiale Bewegung des Koppelelements 28 bzw. dessen Auslenkung ferner dazu, dass auch die Scheibe 32 entgegen der axialen Druckkraft der Torsionsfeder 34, die auf die Schiebe 32 zusätzlich zu der erläuterten Torsionskraft in Richtung des Gehäusedeckels 14 wirkt, eine axiale Bewegung in Richtung des Becherabschnitts 17 erfährt. Dies hat zur Folge, dass die in ihrer Ausgangsstellung befindliche Scheibe 32 von dem Gehäusedeckel14 entriegelt wird, da die Verrastung zwischen den Rastnocken 56 der Scheibe 32 und den Widerlagern 66 des Gehäusedeckels 14 aufgehoben wird. Dies wiederum hat zur Folge, dass die Mitnehmer 51, 52 der Scheibe 32 unabhängig von der aktuellen Drehstellung des Ventilkörpers 16 bzw. des Koppelelements 28 aufgrund der rotatorischen Vorspannwirkung der Torsionsfeder 34 so weit gedreht werden, dass sie mit den Vorspannanschlägen 48 der beiden Nuten 41, 42 in Anlage gelangen.

Sobald dies der Fall ist, werden das Koppelelement 28 und der hiermit drehstarr gekoppelte Ventilkörper 16 durch die über die Scheibe 32 und insbesondere über deren Mitnehmer 51, 52 übertragene Vorspannwirkung der Torsionsfeder 34 in die bereits erwähnte Fail-Safe-Position gedreht. In dieser Fail-Safe-Position stoßen die Rastnocken 56 an Vorsprüngen 59 an, die an der Innenseite des Deckels 14 sowohl in Radial- als auch in Umfangsrichtung versetzt zueinander ausgebildet sind. Der eine dieser Vorsprünge 59 ist dabei dem ersten Rampenabschnitt 61 zugeordnet und befindet sich auf derselben Umfangsbahn wie dieser, wohingegen der andere Vorsprung 59 dem zweiten Rampenabschnitt 62 zugeordnet ist und sich auf derselben Umfangsbahn wie dieser Rampenabschnitt 62 befindet.

Die Bogenlänge bzw. der entsprechende Bogenwinkel zwischen dem jeweiligen Widerlager 66 und dem Anschlag 64 des jeweils zugehörigen Vorsprungs 59 entspricht dabei dem Winkel des Arbeitsbereichs des Ventils 10 im Normalbetriebszustand und somit der Bogenlänge der beiden Nuten 41, 42. Auf diese Weise kann sichergestellt werden, dass der Ventilkörper 16 im Fehlerfall unabhängig von seiner aktuellen Stellung über das Koppelelement 28 von dem Fail-Safe-Mechanismus 40 in seine vorbestimmte Fail-Safe-Position gedreht werden kann, in der der Kühlmittelstrom durch das Ventil 10 vorzugsweise maximal ist, um so Überhitzungszuständen entgegenzuwirken.

Nachdem der Auslöser, der zu dem Fehlerzustand geführt hatte, behoben wurde, kann anschließend der Fail-Safe-Mechanismus 40 wieder zurück in seine Ausgangsstellung überführt werden, in der die Scheibe 32 an dem Gehäusedeckel 14 gesichert ist (sogenanntes Vorspannen oder Aufziehen des Fail-Safe-Mechanismus). Hierzu wird die Aktuatorwelle 26 vom Aktuator 24 aus betrachtet im Gegenuhrzeigersinn bzw. nach links gedreht, was zur Folge hat, dass die Scheibe 32 über die an den beiden Vorspannanschlägen 48 anliegenden Mitnehmer 51, 52 ebenfalls im Gegenuhrzeigersinn bzw. nach links gedreht wird. Hierbei reiten die Rastnocken 56 auf den Rampenabschnitten 61, 62 des Deckels 14 auf und gleiten an diesen entlang hoch, was zur Folge hat, dass die Scheibe 32 kurzzeitig entgegen der axialen Vorspannwirkung der Torsionsfeder 34 in Richtung des Ventilkörpers 16 ausgelenkt wird. Sobald die Rastnocken 56 das obere Ende der Rampenabschnitte 61, 62 passieren, wird dann die Scheibe 32 von der Torsionsfeder 34 wieder zurück in Richtung des Gehäusedeckels 14 gedrängt, wobei in dieser Stellung dann die Rastnocken 56 wieder mit den Widerlagern 66 der Rampenabschnitte 61, 62 in Eingriff gelangen, so dass der Fail-Safe-Mechanismus 40 für eine erneute Auslösung im Fehlerfall bereit ist.

Im Folgenden wird auf bevorzugte konstruktive Details des Ventils 10 genauer eingegangen:
Wie insbesondere den Fig. 3a und 3c entnommen werden kann, weisen die beiden Nuten 41, 42 im Bereich ihres ersten Endes 48 jeweils einen aufgeweiteten Bereich 44 auf, welcher sich in der Einbaulage gemäß Fig. 1 in axialer Richtung sowohl in Richtung des Ventilkörpers 16 als auch in Richtung des Gehäusedeckels 14 aufweitet. Die Aufweitung in Richtung des Ventilkörpers 16 erweist sich dabei dahingehend als vorteilhaft, dass es den in die Nuten 41, 42 eingreifenden Mitnehmern 51, 52 ermöglicht wird, innerhalb der jeweiligen Nut 41, 42 in axialer Richtung auszuweichen, wenn die Scheibe 32 während des Aufziehens des Fail-Safe-Mechanismus 40 der Steigung der Rampenabschnitte 61, 62 folgend in Richtung des Ventilkörpers 16 ausgelenkt wird. Demgegenüber dient die Aufweitung in Richtung des Gehäusedeckels 14 dazu, um einen etwaigen Überhub des temperaturempfindlichen Betätigungselements 30 kompensieren zu können: Wenn nämlich der Fail-Safe-Mechanismus 40 durch das temperaturempfindliche Betätigungselement 30 ausgelöst wurde, kann sich dieses bei einem weiteren Temperaturanstieg in axialer Richtung weiter verformen. Dies kann nach dem Auslösen des Fail-Safe-Mechanismus 40 dazu führen, dass das Koppelelement 28 gegenüber dem Fail-Safe-Mechanismus über Reibung zwischen den Mitnehmern 51, 52 und den Nuten 41, 42 verspannt wird. Um dies zu verhindern, sind die Nuten 41, 42 daher im Bereich ihres ersten Endes 48 in Richtung des Gehäusedeckels 14 aufgeweitet, so dass die Mitnehmer 51, 52 nach dem Auslösen des Fail-Safe-Mechanismus 40 beeinträchtigungsfrei in diesem aufgeweiteten Bereich zu liegen kommen können.

Wie ferner insbesondere den Fig. 3a und 3c entnommen werden kann, weisen die Wandungen der Nuten 41, 42 Durchbrechungen 46 auf. Diese Durchbrechungen 46 dienen während des Zusammenbaus des Ventils dazu, um die Mitnehmer 51, 52 in die jeweilige Nut 41, 42 wie bei einem Bajonettverschluss einführen zu können.

Wie des Weiteren insbesondere der Fig. 4b entnommen werden kann, weisen die beiden Rastnocken 56 jeweils einen Rampenbereich 57 und einen sich daran anschließenden Plateaubereich 58 auf. Die Steigung des Rampenbereichs 57 entspricht dabei der Steigung des jeweils zugehörigen Rampenabschnitts 61, 62 des Gehäusedeckels 14. Hierdurch lassen sich die Flächenpressungen zwischen den Rastnocken 56 und den Rampenabschnitten 61, 62 klein halten, was sich nicht nur positiv auf den Verschleiß sondern auch auf die Leichtgängigkeit des Fail-Safe-Mechanismus 40 auswirkt.

Entsprechend der Darstellung der Fig. 5 ist der Wellenflansch 27 an zwei gegenüberliegenden Seiten abgeflacht. Gemäß einer bevorzugten Ausführungsform ist es jedoch vorgesehen, dass der Wellenflansch 27 nur einseitig abgeflacht ist und dass auch die entsprechende Ausnehmung 29 in dem Koppelelement 28 nur einseitig abgeflacht ist. Hierdurch wird eine Drehcodierung zwischen Welle 26 und Koppelelement 28 geschaffen, die es ermöglicht, dass die beiden in Rede stehenden Bauteile 26, 28 nur in einer definierten Drehstellung miteinander gekoppelt werden können.

Wie des Weiteren der Fig. 1 entnommen werden kann, weist das Ventil 10 ferner eine Druckfeder 36 auf, die sich einerseits am Boden des Becherabschnitts 17 und andererseits an dem Sprengring 31 abstützt und somit das Koppelelement 28 in Richtung des Gehäusedeckels 14 vorspannt. Hierdurch ist sichergestellt, dass nach einem Auslösen des Fail-Safe-Mechanismus 40, und wenn das temperaturempfindliche Betätigungselement 30 infolge einer Abkühlung wieder zusammengezogen ist, die Ausnehmung 29 des Koppelelements 28 wieder mit dem Wellenflansch 27 in formschlüssigen Eingriff gerät, um neuerlich die drehstarre Verbindung zwischen der Aktuatorwelle 26 und dem Koppelelement 28 herzustellen und hierdurch ein Aufziehen des Fail-Safe-Mechanismus 40 mit der nächsten Stellbewegung der Aktuatorwelle 26 zu ermöglichen. Ferner gelingt es, dass die Nuten 41, 42 mit den jeweiligen Mitnehmern 51, 52 ausgerichtet sind, nachdem die Scheibe 32 von der Torsionsfeder 34 nach Abschluss des Vorspannvorgangs des Fail-Safe-Mechanismus 40 zurück gegen den Gehäusedeckel 14 gedrückt wurde. So kann nämlich im Rahmen des Vorspannvorgangs des Fail-Safe-Mechanismus 40 (wenn die Rastnocken 56 der Scheibe 32 an den Rampenabschnitten 61, 62 des Deckels 14 entlang hochgleiten) das Koppelelement 28 reibungsbedingt über die Mitnehmer 51, 52 der Scheibe 32 in Richtung des Ventilkörpers 16 ausgelenkt werden. Da nach Abschluss des Vorspannvorgangs jedoch aufgrund der Verriegelung der Scheibe 32 an dem Gehäusedeckel 14 die Reibung zwischen den Mitnehmern 51, 52 und den Vorspannanschlägen 48 aufgehoben ist, würde das Koppelelement 28 nach Abschluss des Vorspannvorgangs in seiner in Richtung des Ventilkörpers 16 ausgelenkten Stellung verharren. Um dem entgegenzuwirken, wird das Koppelelement 28 daher mit Hilfe der in Rede stehenden Feder 36 in Richtung des Gehäusedeckels 14 vorgespannt, um so für eine ordnungsgemäße Ausrichtung zwischen den Mitnehmern 51, 52 und den Nuten 41, 42 für den Normalbetriebszustand zu sorgen.

### Bezugszeichenliste

- 10: Ventil
- 12: Ventilgehäuse
- 14: Gehäusedeckel an 74
- 16: Ventilkörper in 12
- 17: Becherabschnitt von und in 16
- 18: Einlass an 12
- 19: Auslass an 12
- 20: Einlassdurchgang in 16
- 21: Einlassdurchgang in 16
- 22: Einlassdurchgang in 16
- 23: Speichenabschnitte zwischen 16 und 17
- 24: Aktuator
- 25: Wellenfortsatz
- 26: Aktuatorwelle
- 27: Wellenflansch
- 28: Koppelelement
- 29: Ausnehmung in 28
- 30: Betätigungselement
- 31: Sprengring
- 32: Scheibe, Muffe
- 34: Torsionsfeder in 74
- 35: Betätigungsstift an 30
- 36: Druckfeder in 17
- 38: Zylinderabschnitt von 28
- 39: Sechskantabschnitt, Kupplungsabschnitt von 28
- 40: Fail-Safe-Mechanismus
- 41: Nut in 38
- 42: Nut in 38
- 44: Aufweitung bei 48
- 46: Durchbrechung
- 48: erstes Ende, Vorspannanschlag von 41, 42
- 49: zweites Ende, weiterer Anschlag von 41, 42
- 51: erster Mitnehmer
- 52: zweiter Mitnehmer
- 54: Hülsenabschnitt an 32
- 56: Rastnocken an 32
- 57: Rampenbereich von 56
- 58: Plateaubereich von 56
- 59: Vorsprung an 14
- 61: erster Rampenabschnitt an 14
- 62: zweiter Rampenabschnitt an 14
- 64: Anschläge von 59
- 66: Widerlager
- 68: Öffnung in 14
- 74: Gehäusekörper an 12
- 76: Durchgangsöffnung in 17
- 77: Träger
- 78: Ausströmöffnung

## Patentansprüche

1. Ventil (10) zum Einsatz in einer Kühlmittelströmung, umfassend:
- ein Ventilgehäuse (12) mit zumindest einem Einlass (18) und zumindest einem Auslass (19);
- einen Ventilkörper (16), der von dem Ventilgehäuse (12) drehbar aufgenommen wird, wobei der Kühlmittelstrom zwischen Ein- und Auslass (18, 19) in Abhängigkeit der Drehstellung des Ventilkörper (16) variiert;
- einen Aktuator (24) mit einer Welle (26) zum Drehen des Ventilkörpers (16); und
- einen rotatorisch vorspannbaren Fail-Safe-Mechanismus (40); wobei
der Ventilkörper (16) mit einem axial beweglichen Koppelelement (28) in Dreheingriff steht, über das der Ventilkörper (16) mittelbar mit der Aktuatorwelle (26) lösbar verbunden ist, wobei in einem Fehlerfall der Ventilkörper (16) von der Aktuatorwelle (26) infolge einer axialen Bewegung des Koppelelements (28) entkoppelbar ist, wobei der Fail-Safe-Mechanismus (40) dazu angepasst ist, infolge der axialen Bewegung des Koppelelements (28) mit dem Koppelelement (28) in Dreheingriff zu gelangen, um den Ventilkörper (16) in eine vorbestimmte Fail-Safe-Position zu drehen **dadurch gekennzeichnet, dass** das Koppelelement (28) einen Zylinderabschnitt (38) aufweist, in dessen Außenumfang zumindest eine sich in Umfangsrichtung des Zylinderabschnitts (38) erstreckende Nut (41, 42) ausgebildet ist, in die ein Mitnehmer (51, 52) des Fail-Safe-Mechanismus (40) eingreift und die in Umfangsrichtung an einem ersten Ende durch einen Vorspannanschlag (48) und einem zweiten Ende durch einen weiteren Anschlag (49) begrenzt ist, wobei vorzugsweise zwei sowohl in Axial- als auch in Umfangsrichtung zueinander versetzte Nuten (41, 42) in dem Zylinderabschnitt (38) ausgebildet sind, in die jeweils ein Mitnehmer (51, 52) eingreift.

2. Ventil nach Anspruch 1,
**dadurch gekennzeichnet, dass** die zumindest eine Nut (41, 42) im Umfangsrichtung eine Länge aufweist, die einem Bogenwinkel entspricht der kleiner als 360° ist und vorzugsweise etwa 345° beträgt.

3. Ventil nach Anspruch 1 oder 2,
**dadurch gekennzeichnet, dass** die zumindest eine Nut (41, 42) an ihrem ersten Ende eine sich in Axialrichtung erweiternde Aufweitung (44) aufweist.

4. Ventil nach zumindest einem der vorstehenden Ansprüche,
**dadurch gekennzeichnet, dass** ein temperaturempfindliches Betätigungselement (30) vorgesehen ist, das im Fehlerfall infolge einer axialen temperaturbedingten Verformung die axiale Bewegung des Koppelelements (28) bewirkt, wozu es sich vorzugsweise an der Aktuatorwelle (26) abstützt.

5. Ventil nach zumindest einem der vorstehenden Ansprüche,
**dadurch gekennzeichnet, dass** der Fail-Safe-Mechanismus (40) zumindest einen sich in axialer Richtung erstreckenden Rastnocken (56) aufweist, der im vorgespannten Zustand den Fail-Safe-Mechanismus (40) gegenüber einem sich in radialer Richtung erstreckenden Gehäusedeckel (14) verriegelt, wobei vorzugsweise zwei sowohl in Radial- als auch in Umfangsrichtung zueinander versetzte Rastnocken (56) vorgesehen sind.

6. Ventil nach Anspruch 5,
**dadurch gekennzeichnet, dass** an der Innenseite des Gehäusedeckels (14) zumindest ein sich in Umfangsrichtung erstreckender Rampenabschnitt (61, 62) ausgebildet ist, der ein Widerlager (66) ausbildet, gegen das der zumindest eine Rastnocken (56) des Fail-Safe-Mechanismus (40) im vorgespannten Zustand desselben vorgespannt und verriegelt ist, wobei vorzugsweise zwei sowohl in Radial- als auch in Umfangsrichtung zueinander versetzte Rampenabschnitte (61, 62) vorgesehen sind, denen jeweils einer der vorzugsweise zwei Rastnocken (56) zugeordnet ist.

7. Ventil nach Anspruch 5 oder 6,
**dadurch gekennzeichnet, dass** der zumindest eine Rastnocken (56) an einer sich radial erstreckenden Scheibe (32) des Fail-Safe-Mechanismus (40) ausgebildet ist, die axial beweglich ist.

8. Ventil nach Anspruch 7,
**dadurch gekennzeichnet, dass** der Fail-Safe-Mechanismus (40) durch eine Torsionsfeder (34) rotatorisch vorgespannt ist, die die Scheibe (32) in Axialrichtung gegen den Gehäusedeckel (14) drückt.

9. Ventil nach zumindest einem der vorstehenden Ansprüche,
**dadurch gekennzeichnet, dass** der Ventilköper (16) eine im Wesentlichen hohlzylindrische Gestalt aufweist, wobei mit dem Ventilköper (16) in seinem Innenraum ein Becherabschnitt (17) drehstarr verbunden ist, der einen Kupplungsabschnitt (39) des Koppelelements (28) in Axialrichtung gleitend aufnimmt und mit diesem in Dreheingriff steht, wobei vorzugsweise in einer Seitenwandung des Becherabschnitts (17) zumindest eine Durchgangöffnung (76) für den Kühlmittelstrom ausgebildet ist.

10. Ventil nach zumindest einem der vorstehenden Ansprüche,
**dadurch gekennzeichnet, dass** das Koppelelement (28) durch einen formschlüssigen Eingriff mit der Aktuatorwelle (26) lösbar verbunden ist, wobei infolge der axialen Bewegung des Koppelelements (28) der formschlüssige Eingriff aufgehoben wird.

11. Ventil nach einem der vorstehenden Ansprüche, dadurch gekennzeichent, dass der im Ventilgehäuse gelagerten Ventilkörper (12), der in seinem Außenumfang Öffnungen (21) zur Steuerung eines Flusses von Kühlmittel durch Kanäle im Ventilgehäuse aufweist und ein auf einem topfförmigen Träger (77) im Durchlass gelagertes und auf Temperaturen reagierendes Dehnelement aufweist, wobei im Träger (T) mindestens ein der Durchlassöffnung (76) zugeordnetes Umströmelement angeordnet ist.

## Claims

1. Valve (10) for use in a coolant flow, comprising:
- a valve housing (12) with at least one inlet (18) and at least one outlet (19);
- a valve body (16) which is received rotatably by the valve housing (12), wherein the coolant flow between the inlet (18) and outlet (19) varies depending on the rotary position of the valve body (16) ;
- an actuator (24) with a shaft (26) for rotating the valve body (16); and
- a fail-safe mechanism (40) which can be pretensioned rotationally; wherein
the valve body (16) is in rotational engagement with an axially moveable coupling element (28), via which the valve body (16) is releasably connected indirectly to the actuator shaft (26), wherein in the event of a fault, the valve body (16) can be decoupled from the actuator shaft (26) by an axial movement of the coupling element(28), wherein the fail-safe mechanism (40) is adapted to come into rotational engagement with the coupling element (28) as a result of the axial movement of the coupling element (28), in order to rotate the valve body (16) to a predefined fail-safe position, **characterized in that** the coupling element (28) has a cylinder portion (38), in the outer periphery of which at least one groove (41, 42) is formed which extends in the peripheral direction of the cylinder portion (38) and in which a carrier (51, 52) of the fail-safe mechanism (40) engages and which is limited in the peripheral direction at a first end by a pretension stop (48) and at a second end by a further stop (49), wherein preferably two grooves (41, 42) are formed in the cylinder portion (38) which are offset to each other in the axial and in the peripheral direction and in each of which a carrier (52, 52) engages.

2. Valve according to Claim 1, **characterized in that** the at least one groove (41, 42) has a length in the peripheral direction which corresponds to an arc angle of less than 360° and is preferably around 345°.

3. Valve according to Claim 1 or 2, **characterized in that** the at least one groove (41, 42) has at its first end a widening (44) which widens in the axial direction.

4. Valve according to at least one of the preceding claims, **characterized in that** a temperature-sensitive actuating element (30) is provided which, in the event of a fault, as a result of an axially temperature-induced deformation, causes the axial movement of the coupling element (38), for which it rests preferably on the actuator shaft (26).

5. Valve according to at least one of the preceding claims, **characterized in that** the fail-safe mechanism (40) has at least one engagement cam (56) extending in the axial direction, which in pretensioned state locks the fail-safe mechanism (40) against a housing cover (14) extending in the radial direction, wherein preferably two engagement cams (56) are provided which are offset to each other in the radial and in the peripheral direction.

6. Valve according to Claim 5, **characterized in that** at least one ramp portion (61, 62) is provided on the inside of the housing cover (14) which extends in the peripheral direction and forms an abutment (66), against which the at lesat one engagement cam (56) of the fail-safe mechanism (40) is pretensioned and locked in its pretensioned state, wherein preferably two ramp portions (61, 62) are provided which are offset to each other in the radial and in the peripheral direction and which are each assigned to one of the preferably two engagement cams (56).

7. Valve according to Claim 5 or 6, **characterized in that** the at least one engagement cam (56) is formed on a radially extending disc (32) of the fail-safe mechanism (40) which is axially moveable.

8. Valve according to Claim 7, **characterized in that** the fail-safe mechanism (40) is rotationally pretensioned by a torsion spring (34) which presses the disc (32) in the axial direction against the housing cover (14).

9. Valve according to at least one of the preceding claims, **characterized in that** the valve body (16) has a substantially hollow-cylindrical form, wherein a beaker portion (17) is connected rotationally fixedly to the valve body (16) in its interior, receives a coupling portion (39) of the coupling element (28) sliding in the axial direction and is in rotational engagement therewith, wherein preferably at least one passage opening (76) for the coolant flow is formed in a side wall of the beaker portion (17).

10. Valve according to at least one of the preceding claims, **characterized in that** the coupling element (28) is releasably connected to the actuator shaft (26) by a form-fit engagement, wherein the form-fit engagement is released as a result of the axial movement of the coupling element (28).

11. Valve according to any of the preceding claims, **characterized in that** the valve body (12) which is mounted in the valve housing, which has openings (21) in its outer periphery for controlling a flow of coolant through channels in the valve housing, and comprises a temperature-reacting expansion element mounted in the opening on a pot-like carrier (77), wherein at least one bypass element assigned to the passage opening (76) is arranged in the carrier (T).

## Revendications

1. Soupape (10) pour l'utilisation dans un flux de réfrigérant, comprenant :
- un boîtier de soupape (12) avec au moins une entrée (18) et au moins une sortie (19) ;
- un corps de soupape (16) qui est reçu de manière rotative par le boîtier de soupape (12), le flux de réfrigérant variant entre l'entrée et la sortie (18, 19) en fonction de la position de rotation du corps de soupape (16) ;
- un actionneur (24) avec un arbre (26) pour faire tourner le corps de soupape (16) ; et
- un mécanisme à sûreté intégrée (40) pouvant être précontraint par rotation ;
le corps de soupape (16) étant en prise rotative avec un élément d'accouplement (28) déplaçable axialement, par le biais duquel le corps de soupape (16) est connecté indirectement de manière détachable à l'arbre d'actionneur (26), le corps de soupape (16), en cas de défaillance, pouvant être désaccouplé de l'arbre d'actionneur (26) suite à un déplacement axial de l'élément d'accouplement (28), le mécanisme à sûreté intégrée (40) étant prévu pour parvenir en prise rotative avec l'élément d'accouplement (28) suite au déplacement axial de l'élément d'accouplement (28), afin de faire tourner le corps de soupape (16) dans une position à sûreté intégrée prédéterminée, **caractérisée en ce que** l'élément d'accouplement (28) présente une portion de cylindre (38) dans la périphérie extérieure de laquelle est réalisée au moins une rainure (41, 42) s'étendant dans la direction périphérique de la portion de cylindre (38), dans laquelle s'engage un élément d'entraînement (51, 52) du mécanisme à sûreté intégrée (40) et qui est limitée dans la direction périphérique au niveau d'une première extrémité par une butée de précontrainte (48) et au niveau d'une deuxième extrémité par une butée supplémentaire (49), de préférence deux rainures (41, 42) décalées l'une par rapport à l'autre dans la direction axiale et dans la direction périphérique étant réalisées dans la portion de cylindre (38), dans lesquelles s'engage à chaque fois un élément d'entraînement (51, 52).

2. Soupape selon la revendication 1,
**caractérisée en ce que**
l'au moins une rainure (41, 42) présente dans la direction périphérique une longueur qui correspond à un angle d'arc inférieur à 360° et de préférence d'environ 345°.

3. Soupape selon la revendication 1 ou 2,
**caractérisée en ce que**
l'au moins une rainure (41, 42) présente au niveau de sa première extrémité un élargissement (44) s'élargissant dans la direction axiale.

4. Soupape selon au moins l'une quelconque des revendications précédentes,
**caractérisée en ce qu'**un élément d'actionnement (30) sensible à la température est prévu, lequel, en cas de défaillance du fait d'une déformation axiale due à la température, provoque le déplacement axial de l'élément d'accouplement (28), ce pourquoi il s'appuie de préférence contre l'arbre d'actionneur (26).

5. Soupape selon l'une quelconque des revendications précédentes,
**caractérisée en ce que**
le mécanisme à sûreté intégrée (40) présente au moins une came d'encliquetage (56) s'étendant dans la direction axiale, qui, dans l'état précontraint, verrouille le mécanisme à sûreté intégrée (40) par rapport à un couvercle de boîtier (14) s'étendant dans la direction radiale, deux cames d'encliquetage (56) décalées l'une par rapport à l'autre dans la direction radiale et dans la direction périphérique étant de préférence prévues.

6. Soupape selon la revendication 5,
**caractérisée en ce que**
au moins une portion de rampe (61, 62) s'étendant dans la direction périphérique est réalisée au niveau du côté intérieur du couvercle de boîtier (14), laquelle constitue une butée (66) contre laquelle l'au moins une came d'encliquetage (56) du mécanisme à sûreté intégrée (40) est précontrainte et verrouillée dans l'état précontraint de celui-ci, deux portions de rampe (61, 62) décalées l'une par rapport à l'autre dans la direction radiale et dans la direction périphérique étant de préférence prévues, auxquelles est à chaque fois associée l'une des de préférence deux cames d'encliquetage (56).

7. Soupape selon la revendication 5 ou 6,
**caractérisée en ce que**
l'au moins une came d'encliquetage (56) est réalisée au niveau d'un disque (32) s'étendant radialement du mécanisme à sûreté intégrée (40), qui est déplaçable axialement.

8. Soupape selon la revendication 7,
**caractérisée en ce que**
le mécanisme à sûreté intégrée (40) est précontraint en rotation par un ressort de torsion (34) qui presse le disque (32) dans la direction axiale contre le couvercle de boîtier (14).

9. Soupape selon l'une quelconque des revendications précédentes,
**caractérisée en ce que**
le corps de soupape (16) présente une forme essentiellement cylindrique creuse, une portion de godet (17) étant connectée de manière rigide en rotation au corps de soupape (16) dans son espace intérieur, laquelle reçoit par coulissement dans la direction axiale une portion d'accouplement (39) de l'élément d'accouplement (28) et est en engagement de rotation avec celle-ci, au moins une ouverture de passage (76) pour le flux de réfrigérant étant réalisée de préférence dans une paroi latérale de la portion de godet (17).

10. Soupape selon au moins l'une quelconque des revendications précédentes,
**caractérisée en ce que**
l'élément d'accouplement (28) est connecté de manière détachable par un engagement par correspondance de formes avec l'arbre d'actionneur (26), l'engagement par correspondance de formes étant supprimé du fait du déplacement axial de l'élément d'accouplement (28).

11. Soupape selon l'une quelconque des revendications précédentes, **caractérisée en ce que** le corps de soupape (12) supporté dans le boîtier de soupape, qui présente dans sa périphérie extérieure des ouvertures (21) pour commander un flux de réfrigérant à travers des canaux dans le boîtier de soupape et présente un élément extensible supporté sur un support en forme de pot (77) dans le passage et réagissant aux températures, au moins un élément de circulation associé à l'ouverture de passage (76) étant disposé dans le support (T).
